# FASCICULE DE BREVET EUROPEEN

(11) **EP 3 752 990 B1**
(45) Date de publication et mention de la délivrance du brevet: **22.04.2026**
(21) Numéro de dépôt: 19710050.6
(22) Date de dépôt: 14.02.2019
(51) Int. Cl.: G07F 17/12, G07F 9/02, G07F 11/62, G07G 1/00

(54) **DISPOSITIF DE STOCKAGE D'OBJETS, ET PROCÉDÉ METTANT EN OEUVRE UN TEL DISPOSITIF**
VORRICHTUNG ZUM SPEICHERN VON OBJEKTEN UND VERFAHREN ZUM IMPLEMENTIEREN EINER SOLCHEN VORRICHTUNG
STORAGE DEVICE FOR OBJECTS, AND METHODS TO IMPLEMENT SUCH A DEVICE

(30) Priorité: 16.02.2018 FR 1851332; 10.12.2018 FR 1872615
(43) Date de publication de la demande: 23.12.2020
(73) Titulaire: Orange, 92130 Issy-les-Moulineaux (FR)
(72) Inventeur: EXCOFFIER, David, 92326 CHÂTILLON CEDEX (FR); BOLLE, Sébastien, 92326 CHÂTILLON CEDEX (FR); OTTOGALLI, François-Gaël, 92326 CHÂTILLON CEDEX (FR); DIJOUX, Geneviève, 92326 CHÂTILLON CEDEX (FR)
(86) Numéro de dépôt international: PCT/FR2019/050325
(87) Numéro de publication internationale: WO 2019/158862

(56) Documents cités:
- FR-A1- 2 851 360
- US-A- 5 369 221
- US-A- 5 842 597
- US-A1- 2013 134 178
- US-A1- 2015 186 840
- US-A1- 2016 300 187
- US-B1- 6 879 255

## Description

La présente invention concerne un dispositif de stockage d'objets, le dispositif comportant typiquement un ou plusieurs casiers pouvant être verrouillés ou déverrouillés par des utilisateurs autorisés, ainsi qu'un procédé mettant en œuvre un tel dispositif de stockage.

Le développement notamment des ventes, échanges et prêts par Internet entraine une augmentation du nombre de colis à livrer et des camions de livraison. Ces colis sont amenés jusqu'au domicile des destinataires, ou stockés dans les hangars des transporteurs.

L'augmentation de ces livraisons a un impact fort sur le trafic routier (engorgement des voies de circulation par des camions) et, de fait, sur la pollution atmosphérique. Elle induit également des pertes de temps lorsque la livraison n'a pu se faire pour cause d'absence et qu'il faut aller chercher son colis à un autre endroit.

A cet égard, un changement de comportement des consommateurs peut être noté globalement et il est généralement souhaité une meilleure qualité de vie (moins de pollution), d'acheter ou se faire prêter et utiliser plus de biens et produits de proximité (typiquement de la nourriture produite localement et sans moyens trop extensifs, ou encore des objets du quotidien).

La part de l'économie collaborative et/ou pair à pair ne cesse aussi de croître, selon un nouveau modèle reposant sur le partage ou l'échange entre particuliers de biens (voiture, logement, parking, matériel tel que perceuse ou autres, etc.), de services (covoiturage, bricolage, etc.), ou de connaissances (cours d'informatique, communautés d'apprentissage, etc.), avec échange monétaire (vente, location, prestation de service) ou sans échange monétaire (dons, troc, volontariat), par l'intermédiaire de mises en relation (plateforme numérique).

Il existe par exemple aujourd'hui de nombreux types de distributeurs automatiques, de boissons, de fruits et légumes (œufs, fromages, pain, etc.), voire de glaces ou d'huitres. Ces distributeurs automatiques sont installés en bordure de routes ou dans des lieux de proximité au fur et à mesure que producteurs et consommateurs se convertissent à la vente directe et à ces services de proximité liés à cette nouvelle économie collaborative.

Un problème technique que posent ces distributeurs automatiques est que ces distributeurs n'ont habituellement qu'une fonction unique, pour la vente de biens consommables ou d'équipements qui sont spécifiques au type de distributeur. De fait, chaque distributeur a sa spécificité.

L'état de la technique comprend les documents suivants :
- la demande de brevet français FR 2 851 360 A1 qui présente un dispositif de consigne pour déposer et retirer un objet comprenant au moins un coffre et un capteur de poids soumis au poids dudit coffre ;
- la demande de brevet américain US 2015/186840 A1 qui présente un système intelligent de dépôt et de retrait de colis ;
- le brevet américain US 5,369,221 qui présente un système pour recevoir et stocker des objets avant prise en charge par un livreur, le système comprenant une unité pour peser les objets et une unité pour accepter des paiements ;
- le brevet américain US 6,879,255 B1 qui présente un système pour filmer l'intérieur d'une boîte aux lettres et afficher son contenu à un utilisateur ;
- la demande de brevet américain US 2016/0300187 A1 des dispositifs de stockage d'objets ;
- le brevet américain US 5,842,597 qui présente un distributeur d'objets dont le taux d'humidité est contrôlé pour la vente d'objets sensibles à l'humidité ;
- la demande de brevet américain US 2013/0134178 A1 qui présente un distributeur d'objets comprenant un module de reconnaissance optique permettant d'identifier des séparateurs délimitant des zones sur des étagères comprises dans le distributeur, les objets à vendre par le distributeur étant placés dans des zones délimitées.

La présente invention vient améliorer la situation.

Elle propose à cet effet un procédé, mis en œuvre par des moyens informatiques, de gestion de stockage d'objets, le procédé comprenant, dans un dispositif de stockage comportant au moins un casier incluant un organe de verrouillage/déverrouillage du casier et une pluralité de capteurs, aptes à mesurer des grandeurs physiques respectives, agencés pour délivrer des données propres aux objets déposés dans le casier :
- recevoir une requête de stockage d'un objet dans un casier du dispositif de stockage ;
- déterminer un type d'objet correspondant à l'objet à stocker sur la base de données relatives à l'objet reçues par le dispositif de stockage ;
- sélectionner, en fonction du type d'objet déterminé, un jeu de capteurs parmi la pluralité de capteurs du casier, à activer au moins pendant une utilisation du casier, un capteur dudit jeu de capteurs à activer étant apte à surveiller un état de fraîcheur de l'objet à stocker si celui-ci est déterminé comme étant de type denrée périssable ;
- sur détection d'une utilisation du casier, activer les capteurs sélectionnés.

Une telle mise en œuvre permet notamment, par la sélection de capteurs appropriés au type d'objet à stocker, d'offrir à un casier une pluralité d'usages possibles et ce pour différentes applications (livraison de colis, don d'objet, livraison de denrées alimentaires, ou autres).

Dans une réalisation, le procédé comprend en outre :
- sur détection d'une utilisation du casier, traiter les données délivrées par le jeu de capteurs activés pour vérifier si l'objet déposé dans le casier correspond au type d'objet déterminé selon au moins un critère choisi, et
- piloter l'organe de verrouillage/déverrouillage du casier selon une vérification respectivement positive/négative de l'objet déposé.

Une telle mise en œuvre permet notamment, dans une application particulière, de vérifier que l'objet placé dans le casier correspond bien à une description préalablement donnée par une entité responsable de la remise de l'objet dans le casier. Dans une telle application notamment, les capteurs du casier sont sélectionnés et activés pour permettre cette vérification.

En particulier, il peut être prévu qu'une partie au moins des capteurs dudit jeu de capteurs sélectionné, est activée avant le verrouillage du casier, pour vérifier si l'objet déposé dans le casier est conforme à des données parmi les données reçues relativement à l'objet.

Néanmoins, tout ou partie des capteurs du casier peuvent être utilisés ensuite pour la surveillance de l'objet pendant le stockage. Ainsi, une partie au moins des capteurs dudit jeu de capteurs sélectionné, peut être activée en outre après le verrouillage du casier, afin de surveiller l'objet déposé dans le casier pendant le verrouillage du casier. Par exemple, le casier peut comporter au moins un capteur d'analyse de gaz, activé pour un type d'objet correspondant à une denrée alimentaire périssable.

Dans une variante d'application où l'objet n'a pas spécifiquement été décrit préalablement, le procédé peut comporter en outre :
- déterminer le type d'objet sur la base de données générées par l'un au moins des capteurs du jeu de capteurs sélectionné.

Par exemple, la détermination du type d'objet peut utiliser un ou plusieurs capteurs du casier, par exemple une caméra qui prend une photographie numérique pour la comparer à une base de données d'objets, et/ou un capteur de pression pour comparer le poids avec des données de la base de données. Ainsi, il est possible d'effectuer une détection automatique de l'objet mis dans le casier.

Dans une réalisation, le dispositif de stockage comporte une pluralité de casiers, et au moins un casier est choisi, parmi ladite pluralité de casiers, pour un stockage d'objets en fonction du type d'objet à stocker, et le procédé comprend en outre :
- identifier un casier incluant le jeu sélectionné de capteurs et apte à stocker l'objet.

Ainsi, quand bien même un casier peut comporter un grand nombre de capteurs et être affecté à un grand nombre d'usages possibles au sens de la présente invention, pour un stockage spécifique d'un objet nécessitant un type de capteur donné, il est possible, par cette mise en œuvre, de sélectionner un casier particulier parmi un ensemble de casiers pour sélectionner ce casier particulier s'il comporte le capteur convenant pour le stockage d'un objet spécifique. On comprendra ainsi que l'ensemble des casiers peut faire partie d'un système comprenant un circuit de traitement capable de déterminer un ou plusieurs casiers convenant pour un stockage donné.

Dans une réalisation, le jeu de capteurs activés pour un casier donné est modifiable au moins d'un déverrouillage du casier à un déverrouillage suivant, notamment en fonction du type d'objet à stocker.

Ainsi, dans cette réalisation, un casier utilisé pour un stockage d'un objet donné, peut être utilisé à nouveau pour le stockage d'un autre objet, éventuellement de type différent.

Dans le mode de réalisation où les données relatives à l'objet sont obtenues, celles-ci peuvent comporter au moins des données d'image de l'objet, et le jeu de capteurs activés comporte une caméra apte, en coopération avec un module de reconnaissance de forme, à acquérir au moins une image de l'objet suite au dépôt de l'objet dans le casier et à reconnaitre au moins un type d'objet déposé, le procédé comprenant alors en outre :
- déterminer si les données d'image de l'objet correspondent au type d'objet reconnu.

Alternativement ou en combinaison, les données relatives à l'objet peuvent comporter au moins des données de poids de l'objet, et le jeu de capteurs activés comporte un capteur de pression sur une paroi interne inférieure du casier pour peser l'objet suite au dépôt de l'objet dans le casier, le procédé comprenant alors en outre :
- déterminer si le poids mesuré par le capteur de pression correspond au poids de l'objet selon les données reçues.

Dans une réalisation générale, il est possible de prévoir que le casier précité comporte une ou plusieurs ouvertures aménagées dans une paroi au moins du casier. Ainsi, le procédé peut comporter :
- après la sélection du jeu de capteurs à activer, acheminer au moins un capteur du jeu sélectionné jusqu'à l'ouverture dans la paroi du casier pour introduire au moins partiellement ce capteur dans le casier.

Dans une telle réalisation, il est alors possible par exemple de mutualiser des capteurs entre plusieurs casiers que peut comporter le dispositif de stockage. Ainsi, si un capteur nécessité par le type d'objet à stocker n'est pas disponible dans le casier destiné à accueillir cet objet, on peut prévoir d'acheminer un capteur homologue jusqu'à l'ouverture de ce casier.

Ainsi, dans une forme de réalisation où le dispositif de stockage comporte en outre au moins un logement pour une pluralité de capteurs, le procédé peut comporter :
- après la sélection du jeu de capteurs à activer, vérifier une disponibilité dans le casier des capteurs du jeu sélectionné,
- et, en cas d'indisponibilité de l'un au moins des capteurs du jeu dans le casier, acheminer, depuis le logement de capteurs jusqu'à l'ouverture du casier, un capteur homologue au capteur indisponible.

Comme évoqué ci-dessus, un capteur peut être partagé entre plusieurs casiers et selon les besoins respectifs de surveillance du stockage dans les différents casiers respectifs, il peut être choisi un capteur spécifique pour les besoins d'un casier donné et on peut prévoir alors l'acheminement de ce capteur depuis le logement précité jusqu'à l'ouverture de ce casier donné.

Dans une telle réalisation :
- le dispositif de stockage comporte une pluralité de casiers comportant chacun au moins une paroi comprenant au moins une ouverture,
- le logement comporte une pluralité de types distincts de capteurs à des emplacements prédéterminés du logement,
- le dispositif de stockage comporte en outre un organe d'acheminement d'un capteur depuis un emplacement de ce capteur dans le logement jusqu'à une ouverture de casier.

Ainsi, le procédé peut comporter :
- après la sélection du jeu de capteurs à activer dans un casier courant, vérifier une disponibilité dans le casier courant des capteurs du jeu sélectionné,
- et, en cas d'indisponibilité de l'un au moins des capteurs du jeu dans le casier courant, adresser l'organe d'acheminement pour piloter l'acheminement d'un capteur homologue au capteur indisponible, depuis l'emplacement du capteur homologue dans le logement de capteurs jusqu'à l'ouverture du casier courant.

Bien entendu, préalablement à tout acheminement d'un capteur vers un casier courant, il convient de vérifier si touts les capteurs du jeu sélectionné ne sont pas déjà tous présents dans ce casier courant.

L'organe d'acheminement précité peut comporter un organe de préhension (par exemple une pince mécanique articulée ou une tête aimantée pour attirer les parties métalliques du capteur). L'organe d'acheminement peut se présenter ainsi sous la forme d'un bras articulé par exemple, ou encore comporter des rails et/ou des câbles d'acheminement des capteurs.

Une telle réalisation est particulièrement avantageuse en tant que telle. Elle peut d'ailleurs viser en outre l'acheminement d'actionneurs jusqu'à l'ouverture précitée d'un casier. Un tel actionneur peut être par exemple un dispositif de lumière (de type LED ou autre) pour éclairer l'intérieur du casier, ou autre.

La présente invention vise aussi un dispositif de stockage comprenant au moins un casier équipé d'une pluralité de capteurs aptes à mesurer des grandeurs physiques respectives et d'un organe de verrouillage/déverrouillage dudit casier, ainsi qu'un circuit de traitement configuré pour la mise en œuvre du procédé ci-avant.

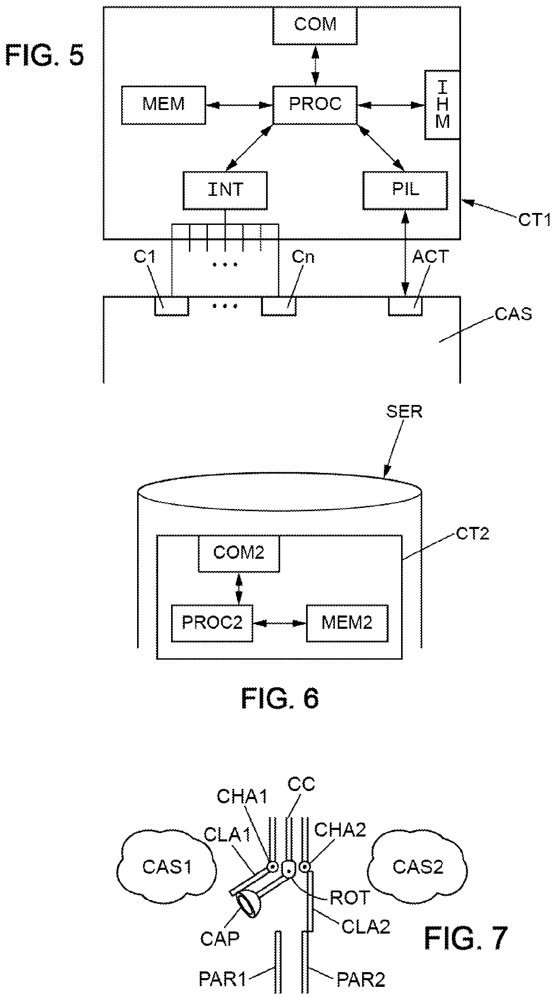

Un exemple d'un tel circuit de traitement est illustré sur la figure 5 commentée ci-après.

La présente invention vise aussi un système comprenant :
- un serveur et
- un dispositif de stockage comprenant :
- au moins un casier incluant une pluralité de capteurs aptes à mesurer des grandeurs physiques respectives,
- un actionneur pour verrouiller/déverrouiller le casier,
- et un module de communication avec le serveur,
le serveur comprenant un circuit de traitement pour :
- recevoir une requête de stockage d'un objet dans un casier,
- déterminer un type d'objet correspondant à l'objet à stocker sur la base de données relatives à l'objet reçues par le dispositif de stockage ;
- sélectionner, en fonction du type d'objet déterminé, un jeu de capteurs parmi la pluralité de capteurs du casier, à activer au moins pendant une utilisation du casier, un capteur dudit jeu de capteurs à activer étant apte à surveiller un état de fraîcheur de l'objet à stocker si celui-ci est déterminé comme étant de type denrée périssable ;
- sur détection d'une utilisation du casier, activer les capteurs sélectionnés.

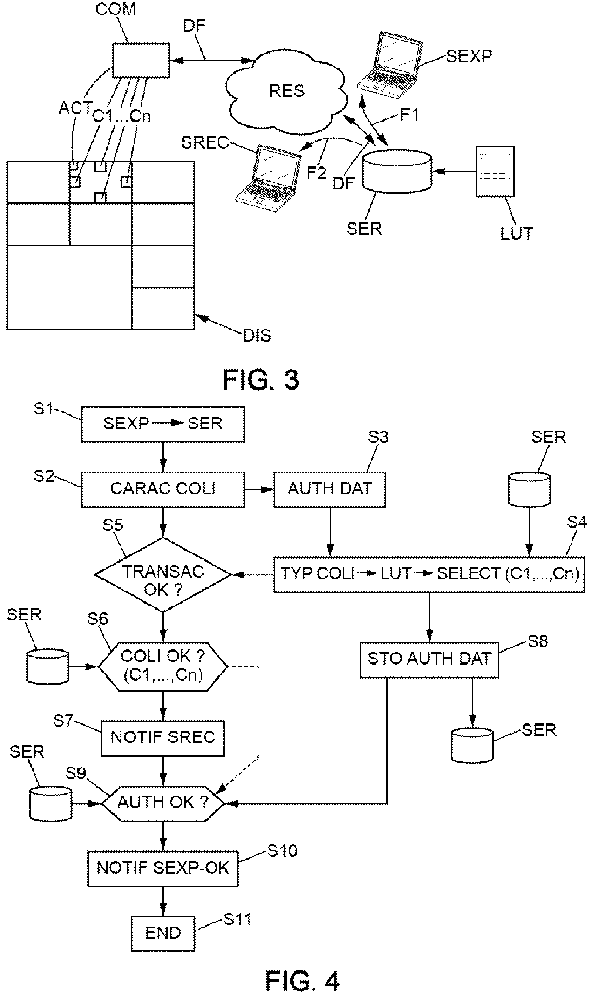

Un exemple d'un tel système est illustré sur la figure 3 commentée ci-après.

Le serveur du système précité est un élément important et la présente invention peut viser en outre le serveur de gestion de stockage d'un objet dans un dispositif de stockage, d'un système au sens de la présente invention.

Un exemple d'un tel serveur et de son circuit de traitement est illustré sur la figure 6 commentée plus loin.

La présente invention vise aussi un programme informatique comportant des instructions pour la mise en œuvre du procédé ci-avant, lorsque ces instructions sont exécutées par un processeur.

La figure 4 commentée ci-après illustre un exemple d'algorithme général d'un tel programme informatique.

D'autres caractéristiques, détails et avantages de l'invention apparaîtront à la lecture de la description détaillée ci-après, et à l'analyse des dessins annexés, sur lesquels :
La figure 1 illustre un casier d'un dispositif de stockage proposé selon un ou plusieurs modes de réalisation;
La figure 2 illustre un ensemble de casiers d'un dispositif de stockage proposé selon un ou plusieurs modes de réalisation;
La figure 3 illustre un système comportant un dispositif de stockage et un serveur selon un ou plusieurs modes de réalisation, en coopération via un réseau étendu dans l'exemple représenté;
La figure 4 présente un exemple de procédé proposé selon un ou plusieurs modes de réalisation;
La figure 5 illustre schématiquement un circuit de traitement d'un dispositif de stockage proposé selon un ou plusieurs modes de réalisation;
La figure 6 illustre schématiquement un circuit de traitement d'un serveur proposé selon un ou plusieurs modes de réalisation;
La figure 7 illustre un exemple de réalisation possible de mise en commun d'un capteur, ici entre deux casiers, selon une vue en coupe d'une cloison commune entre les deux casiers CAS1 et CAS2, cette cloison comportant deux parois parallèles PAR1 et PAR2;
La figure 8 illustre un mode de réalisation d'un partage d'une pluralité de capteurs entre plusieurs casiers comportant au moins une paroi dans laquelle est aménagée au moins une ouverture;
La figure 9 illustre une autre forme de réalisation d'un partage d'une pluralité de capteurs entre plusieurs casiers.

L'invention permet d'offrir des casiers communicants, permettant le stockage/distribution d'objets, regroupés ou non dans des dispositifs de stockage tels que des distributeurs automatiques, et dont la fonction et les services associés à chacun des casiers (et du dispositif lui-même) peuvent varier au fil du temps selon les besoins et usages des utilisateurs et exploitants.

Les fonctionnalités de cette nouvelle génération de dispositifs de stockage/distribution peuvent être, par exemple non limitativement :
- la vente : de fruits, de légumes (produits en vrac ou non), journaux ou tout autre bien de consommation,
- la consigne : dépôt et récupération d'objets par une même personne.
- l'envoi et la récupération d'objets : de colis, de lettres, etc.,
- le prêt d'objets appartenant à autrui avec utilisation payante ou non : matériel tel qu'une perceuse, une crêpière, etc.,
- le don d'objets : par exemple un abri à livres, à CD, ou autre,
- une utilisation pour un secours ou une urgence : entreposage de biens liés à des premiers secours ou des urgences (défibrillateur, extincteur, ou autre) permettant leur utilisation en cas d'urgence (incendie, urgence médicale).

Les services de ce type de stockage selon l'invention peuvent être, grâce à l'usage d'un ou plusieurs capteurs (caméra, capteur de gaz pour reconnaitre des denrées alimentaires, ou autres), par exemple (liste non limitative):
- Reconnaissance fine de l'objet qui est placé dans un casier de stockage,
- Mesure du poids de l'objet placé dans le casier de stockage,
- Mesure du volume de l'objet qui est placé dans le casier de stockage.
- Analyse de l'air à l'intérieur du dispositif de stockage, et alentour.
- Mesure de la température à l'intérieur du dispositif de stockage, et alentour.

Ce nouveau dispositif de dépôt/distribution, communicant, et dont la fonctionnalité de chacune des « zones de dépôt » ou « casier communicant » peut être reconfiguré à tout instant selon le besoin de chaque utilisateur ou de l'exploitant, permet ainsi de répondre à des problématiques telles que:
- Se déplacer moins en permettant aux usagers d'utiliser de nouvelles fonctionnalités liées à ces distributeurs automatiques (généralement localisés dans des zones à fort passage telles que des stations de transport en commun urbain, qui sont centrales ou avec de nombreuses connexions et donc très fréquentées),
- Consommer mieux et de façon plus responsable en ayant accès à des produits variés et/ou locaux (circuit-court) dans un même endroit,
- Limiter les emballages en permettant la vente de produits en vrac en libre-service,
- Permettre à tout un chacun de louer/donner ses propres objets de façon sûre et sécurisée,
- Pouvoir vendre en direct ce que l'on a produit, et optimiser l'utilisation des surfaces disponibles en zone dense par la reconfiguration dynamique des fonctions et usages de chaque casier de façon indépendante.

Ces casiers communicants peuvent être proposés unitairement, ou regroupés sous différentes formes (comme sous la forme de distributeurs automatiques), ou sous la forme d'une succession de casiers de stockage de plus grandes dimensions, ou autres.

Ils peuvent eux-mêmes se reconfigurer pour offrir des volumes de stockage variables (par ouverture et/ou escamotage de cloisons entre plusieurs casiers contigus pour créer un casier de volume supérieur).

Ces casiers communicants peuvent être installés de façon statique (comme les distributeurs automatiques ou à casiers actuels connus), ou embarqués dans des équipements mobiles (véhicules, robots, drones, etc.).

Certains casiers communicants peuvent avoir une fonctionnalité unique, et d'autres casiers, des fonctionnalités multiples reconfigurables dynamiquement, selon le souhait du fabricant ou de l'exploitant des casiers/dispositif de stockage. Tout espace clos contrôlé par une fermeture pilotable peut potentiellement devenir un casier communicant.

Cette fonctionnalité de dépôt/distribution multifonctions peut de plus permettre de connaitre les habitudes des personnes l'utilisant, en analysant de façon automatisée l'usage qui en est fait, notamment en analysant ses différents contenus successifs. Il peut même être procédé à l'analyse et au contrôle de l'écosystème de proximité (typiquement l'observation des interactions des clients avec les différents objets stockés, selon différentes zones ou types de zone).

On décrit ci-après plus en détails la structure physique d'un dispositif à casier, ses interconnexions avec des applications distantes, et des exemples d'utilisation.

Dans ce qui suit, on entend par « dispositif de stockage» un dispositif connecté comportant:
- un ou plusieurs compartiments de type « casier »,
- un ou plusieurs modules de communication par exemple dans chaque casier, et
- un ou plusieurs capteurs par exemple dans chaque casier, aptes à mesurer des grandeurs physiques respectives, et délivrer des signaux respectifs pouvant être transmis par le module de communication du casier à une entité distante.

En outre, le terme « utilisateur » désigne indistinctement une personne physique ou morale (l'exploitant par exemple), une application ou un composant logiciel, un système ou sous-système logiciel ou matériel, un objet connecté ou numérique/dématérialisé (livre, document, ou autre), ou toute autre entité selon le contexte d'utilisation de l'invention, qui place ou fait placer l'objet dans le casier ou dispositif de stockage. Le terme « client » désigne la personne qui ouvre ensuite le casier ou dispositif de stockage pour y prendre l'objet.

Ainsi, un dispositif de stockage physique regroupe un ou plusieurs casiers connectés, et permet de déposer et/ou retirer un ou plusieurs objets en associant à chaque ou ensemble de casiers contenant un objet un ensemble de fonctionnalités précises à un instant donné.

Ce dispositif de stockage peut être par exemple construit sous la forme d'un distributeur automatique d'objets, de toute autre forme/taille.

Le dispositif de stockage peut être appareillé avec un certain nombre de capteurs/actionneurs, permettant d'offrir des fonctionnalités propres au dispositif de stockage.

Le casier, zone de stockage physique, est une zone fermée par une porte et confine l'objet dans un espace clos. La porte est pilotée par un circuit de traitement comportant le module de communication du casier pour commander l'ouverture ou la fermeture de la porte préférentiellement à distance lorsque des conditions prédéfinies sont réunies selon la fonction ou le groupe de fonctions recherchées pour le casier du dispositif de stockage.

Le casier possède ainsi un équipement de verrouillage/déverrouillage de porte qui assure un contrôle d'accès strict au contenu du casier, ou groupe de casiers. La mise en œuvre des autorisations nécessaires à l'accès, par exemple l'identification et l'authentification de la partie en présence, peuvent s'appuyer sur les capteurs et actionneurs associés au casier. Les capteurs et actionneurs peuvent être physiquement présents sur le casier, ou groupe de casiers, ou bien placés dans une zone de proximité compatible avec les contraintes de mise en œuvre de l'autorisation d'accès au contenu du casier.

Le casier est appareillé avec des capteurs/actionneurs permettant d'offrir des fonctionnalités propres à chaque casier, par exemple de mesurer les conditions de stockage du produit déposé, la forme du produit, son poids, son état (denrée alimentaire avancée par exemple), de reconnaitre les fonctionnalités ou l'utilisation potentielle du produit déposé, sa non-conformité, sa dangerosité, etc.

Les capteurs peuvent mesurer les grandeurs physiques de température, hygrométrie, pression (poids de l'objet déposé), détecteur de gaz (tous types), caméra, capteur de vibrations. Les actionneurs peuvent être, outre un loquet électronique pour le verrouillage/déverrouillage de la porte, un dispositif de réfrigération commun à un ou plusieurs casiers, un dispositif d'extinction d'incendie, d'alarme, ou autre.

Chaque casier peut être appareillé avec un ensemble de ces capteurs/actionneurs de façon identique, ou de façon différente, selon le souhait de l'utilisateur ou du fabricant/fournisseur du dispositif de stockage.

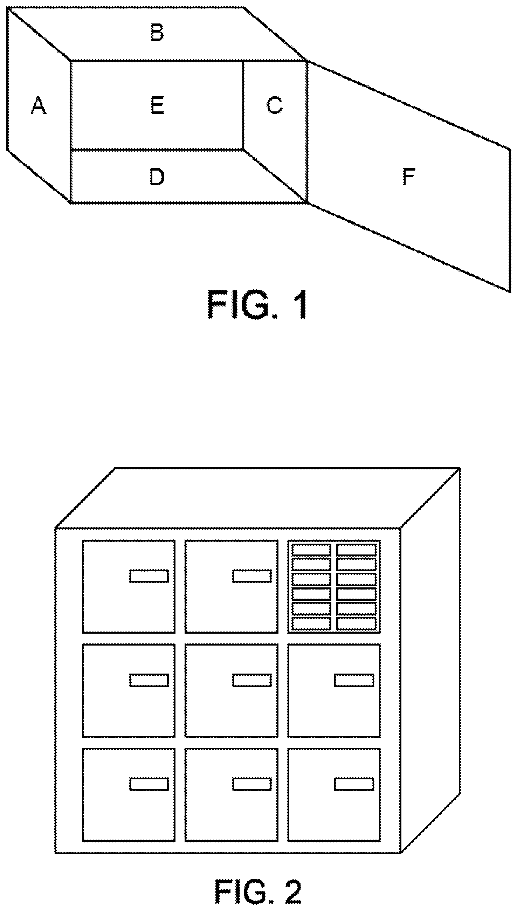

Un casier est illustré sur la **figure 1****.** Ces capteurs/actionneurs peuvent être positionnés sur une face quelconque du casier, de A à F, comme illustré sur la figure 1, sur laquelle la référence F représente la porte possédant la serrure pilotable (et pouvant s'ouvrir par la droite, la gauche, le haut, le bas, ou de toute autre façon).

Le casier n'a pas forcément une forme cubique comme montré dans la figure 1, mais peut prendre toute forme nécessaire ou souhaitée pour la réalisation de ses fonctions.

La mise en œuvre d'une fonction, ou groupe de fonctions, associée à un casier, ou groupe de casiers, peut nécessiter de disposer des ressources nécessaires à l'exécution d'instructions d'un programme informatique (par exemple un processeur, une mémoire de stockage, un module de communication, etc.). Ces ressources peuvent être attribuées de façon exclusive à un casier, ou groupe de casiers, ou bien mutualisées au sein d'un groupe de casiers, ou même appartenir à un autre système ou sous-système (distant ou non) que le casier ou groupe de casiers concernés.

Un dispositif de stockage regroupant plusieurs casiers est illustré sur la **figure 2****,** avec dans l'exemple représenté, une interface homme/machine (en haut à droite du dispositif de stockage) pour piloter l'ouverture ou la fermeture de chaque porte d'un casier du dispositif.

La **figure 3** illustre une réalisation pratique purement à titre illustratif, dans laquelle :
- le dispositif de stockage DIS comporte un ou plusieurs casiers (qui ne sont pas nécessairement de même taille, comme le montre le bas de la figure 3 à gauche),
- chaque casier peut comporter une pluralité de capteurs C1,..., Cn, par exemple positionnés sur une ou plusieurs faces du casier selon les besoins, ainsi qu'un ou plusieurs actionneurs ACT pour le verrouillage/déverrouillage de la porte du casier,
- ces différents équipements C1, ..., Cn, ACT sont reliés à un module de communication COM intégré ou non au dispositif de stockage DIS.

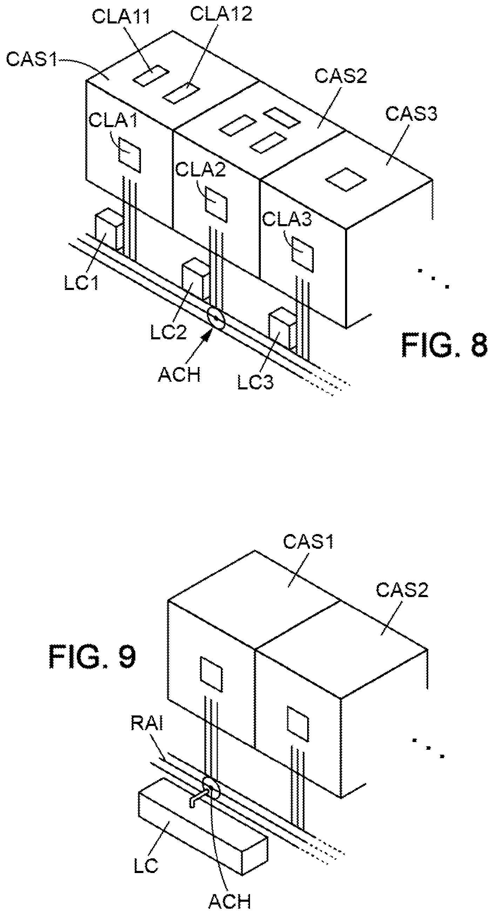

Plus particulièrement, le module de communication COM est relié par exemple via un réseau étendu RES à un serveur SER (serveur de gestion) du gestionnaire des casiers. En outre, ce serveur SER peut par exemple stocker en mémoire MEM2 (figure 6) une table de correspondance LUT qu'il peut consulter pour déterminer, pour un type de stockage sollicité par un utilisateur expéditeur, les capteurs du casier à activer (ou à amener au casier comme présenté plus loin en référence à la figure 8 notamment) parmi les capteurs C1, ..., Cn. Une telle réalisation permet de surveiller que l'objet déposé par l'utilisateur expéditeur correspond bien à un objet attendu pour ce casier et/ou de remonter des alarmes en cas de problème lié au stockage (double flèche DF pour piloter l'activation de capteurs via le module COM et pour remonter les mesures de capteurs au serveur SER). Par exemple, dans un ou plusieurs modes de réalisation, l'utilisateur qui dépose l'objet peut être équipé d'un terminal SEXP (par exemple de smartphone, tablette, ordinateur personnel, ordinateur portable, ou tout équipement électronique agencé pour exécuter sur un processeur une application logicielle (par exemple application logicielle dédiée ou application web exécutée à partir d'un navigateur) configurée pour remplir les fonctions décrites ci-après pour le terminal SEXP dans un ou plusieurs modes de réalisation) pour définir les caractéristiques de l'objet à stocker et communiquer les données de l'objet au serveur SER (flèche F1 vers le serveur). En variante, bien entendu, l'utilisateur peut directement saisir ces données via une interface homme/machine IHM (figure 5) du dispositif de stockage DIS, sur place, avant de déposer l'objet dans le casier.

Par «serveur», on entend dans les présentes tout point de service, virtualisé ou non, ou tout dispositif opérant des traitements de données, une ou plusieurs bases de données, et/ou des fonctions de communication de données. Par exemple, et de manière non limitative, le terme «serveur» peut faire référence à un processeur physique qui est couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'à un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que plateforme de gestion peuvent inclure, à titre d'exemples non limitatifs, des serveurs dédiés montés sur rack, des ordinateurs de bureau, des ordinateurs portables, des passerelles de service, parfois appelées «boxes» ou «passerelle résidentielle», des décodeurs multimédia, parfois appelés «set-top boxes», des équipements intégrés combinant diverses fonctionnalités, telles que deux ou plus des fonctionnalités mentionnées ci-dessus. Les serveurs ou plateformes de gestion peuvent fortement varier dans leur configuration ou leurs capacités, mais un serveur de gestion inclura généralement une ou plusieurs unité(s) centrale(s) de traitement et une mémoire. Un serveur de gestion peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, ou un équivalent.

Les termes «réseau» et «réseau de communication» tels qu'utilisés dans les présentes font référence à une ou plusieurs liaisons de données qui peut (peuvent) coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur de gestion et un module de communication d'un dispositif de stockage tel que proposé par les présentes ou d'autres types de dispositifs, y compris des terminaux sans fil couplés ou connectés par un réseau sans fil, par exemple. Un réseau peut aussi inclure une mémoire de masse pour stocker des données, tel qu'un NAS, pour «network attached storage» en anglais, un SAN, pour «storage area network» en anglais, ou toute autre forme de support lisible par un ordinateur ou par une machine, par exemple. Un réseau peut comprendre, en tout ou partie, le réseau Internet, un ou plusieurs réseaux locaux, ou LANs pour «local area networks» en anglais, un ou plusieurs réseaux de type WAN, pour «wide area networks» en anglais», des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Une fois l'objet déposé, le serveur de gestion SER peut être agencé pour notifier la disponibilité du colis au terminal SREC du client destinataire (flèche F2). Après la récupération de l'objet (par une personne destinataire (connue ou non du déposant) ou par le déposant lui-même), le module de communication COM peut être agencé pour signaler la récupération au serveur SER, lequel peut être agencé pour ensuite notifier au terminal SEXP que l'objet a bien été récupéré (flèche F1 vers le terminal SEXP), comme développé dans les commentaires ci-après de la figure 4.

Le procédé proposé prévoit, dans un ou plusieurs modes de réalisation, la réception, par un dispositif de stockage comportant au moins un casier incluant un organe de verrouillage/déverrouillage du casier (ACT) et une pluralité de capteurs (C1, ... , Cn) agencés pour délivrer des données propres aux objets déposés dans le casier, d'une requête de stockage d'un objet dans un casier du dispositif de stockage. Cette requête de stockage peut par exemple être reçue depuis un terminal dont est équipé un utilisateur. Le terminal peut être par exemple un smartphone, une tablette, un ordinateur personnel, un ordinateur portable, ou tout équipement électronique agencé pour exécuter sur un processeur une application logicielle (par exemple application logicielle dédiée ou application web exécutée à partir d'un navigateur). L'application logicielle peut être alors configurée pour remplir les fonctions décrites ci-après pour le terminal SEXP dans un ou plusieurs modes de réalisation, suite à une commande de l'utilisateur effectuée sur son terminal via l'application. En fonction du mode de réalisation, la requête de stockage peut ou non comprendre des données relatives à l'objet. Des modes de réalisation dans lesquels l'utilisateur déposant communique au dispositif de stockage des données des données relatives à l'objet, comme par exemple des caractéristiques de l'objet que l'utilisateur déposant souhaite déposer dans un casier du dispositif de stockage, sont décrits ci-après, notamment en référence à la figure 4.

Le procédé proposé prévoit en outre de déterminer un type d'objet correspondant à l'objet à stocker. Cette détermination peut être effectuée dans un ou plusieurs modes de réalisation en tout ou partie en utilisant des données relatives à l'objet fournies par l'utilisateur déposant, comme décrit ci-dessous dans le cadre de modes de réalisation illustrés par la figure 4.

Dans d'autres modes de réalisation, cette détermination peut être effectuée, en tout ou partie, par le dispositif de stockage, notamment en utilisant un ou plusieurs capteurs du casier du dispositif de stockage dans lequel l'objet aura été déposé par l'utilisateur déposant. Elle peut être déclenchée, de manière manuelle (par exemple sur indication de l'utilisateur que l'objet a été déposé dans le casier) ou automatique sur détection qu'un objet a été placé dans un casier du dispositif (par exemple sur détection par un capteur de pression du poids de l'objet suite à sa remise dans le casier).

Par exemple, lorsque le casier dans lequel l'objet a été déposé est muni d'un capteur de pression pour mesurer un poids de l'objet (ou tout autre capteur apte à mesurer un poids de l'objet ou générer des données relatives au poids de l'objet), la détermination du type d'objet peut utiliser des données de poids générées par le capteur.

Dans un autre exemple, lorsque le casier dans lequel l'objet a été déposé est muni d'une caméra pour acquérir des données visuelles (une image, une vidéo, etc.) concernant l'objet (ou tout autre capteur apte à acquérir des données visuelles concernant l'objet), la détermination du type d'objet peut utiliser des données visuelles générées par le capteur.

Dans des modes de réalisation dans lesquels la détermination d'un type d'objet correspondant à l'objet à stocker est effectuée, au moins en partie, par le dispositif de stockage, cette détermination peut utiliser une ou plusieurs bases de données d'objets et/ou de types d'objet, à partir d'une ou plusieurs acquisitions de données effectuées par un ou plusieurs des capteurs du casier dans lequel l'objet a été placé. Par exemple, ces données peuvent être transmises à un (ou plusieurs) serveur hébergeant ces bases de données, qui en retour transmet des données de type d'objet telles que déterminées en utilisant la ou les bases de données. Les données acquises, à comparer à celles de la base, peuvent être par exemple des données d'images, et il peut être mis en œuvre un module de reconnaissance d'objet évaluant par exemple un score de similarités entre l'objet dont l'image est acquise et des images de la base.

Dans des modes de réalisation où la détermination d'un type d'objet correspondant à l'objet à stocker est effectuée conjointement sur la base de données relatives à l'objet générées par le dispositif de stockage d'une part, et sur la base de données relatives à l'objet reçues par le dispositif de stockage d'autre part, les données de type d'objet issues de la détermination par le dispositif de stockage et les données de type d'objet issues de la détermination effectuée sur la base des données reçues peuvent être combinées pour affiner la détermination du type d'objet déposé dans le casier.

Dans un ou plusieurs modes de réalisation, le procédé proposé prévoit ensuite de sélectionner, en fonction du type d'objet déterminé, un jeu de capteurs parmi la pluralité de capteurs du casier, à activer au moins pendant une utilisation du casier. Comme décrit ci-dessous, la détermination du jeu de capteurs à activer pour une utilisation du casier pourra tenir compte d'une détermination de type d'objet ayant conduit à déterminer que l'objet est de type denrée périssable, afin de permettre à l'utilisateur déposant de gérer des durées de stockage de denrées périssables placées dans des casiers sur la base d'images de ces denrées, prises à intervalles par exemple réguliers par un capteur d'image du casier, et transmises à l'utilisateur déposant, et/ou sur la base de données générées par un capteur d'analyse de gaz.

Dans un ou plusieurs modes de réalisation, le procédé proposé prévoit en outre d'activer les capteurs sélectionnés pour la surveillance du stockage sur détection d'une utilisation du casier.

La détection d'une utilisation du casier peut varier selon le mode de réalisation, et par exemple correspondre à la détection que le casier a été verrouillé, par l'utilisateur ou par le dispositif sur commande de l'utilisateur déposant, ou correspondre à la réception d'une commande utilisateur, notamment dans les cas où le casier dans lequel l'objet a été placé n'est pas verrouillé.

La surveillance du stockage peut correspondre, en fonction du mode de réalisation, à une gestion plus ou moins sophistiquée du stockage, par exemple pour déterminer que l'objet est encore placé dans le casier ou au contraire qu'il en a été retiré. La surveillance peut aussi, dans un ou plusieurs modes de réalisation, comprendre une surveillance continue de l'objet, par exemple dans le cas où l'objet est de type denrée périssable, comme indiqué ci-dessus. La surveillance peut ainsi, en fonction du mode de réalisation, être effectuée à des degrés divers, en fonction de l'utilisation qui est faite du casier et/ou de l'objet ou du type d'objet pour lequel le dispositif de stockage est utilisé.

En référence maintenant à la **figure 4****,** le terminal de l'utilisateur déposant SEXP (ou en variante directement l'interface IHM du dispositif de stockage) peut, dans un ou plusieurs modes de réalisation, contacter (S1) le serveur SER pour lui communiquer des caractéristiques de l'objet que l'utilisateur déposant souhaite déposer, ainsi qu'éventuellement les coordonnées de l'utilisateur destinataire si celui-ci est connu, par exemple un identifiant associé à son terminal SREC.

Les caractéristiques de l'objet sont ensuite analysées (S2) pour déterminer quels capteurs sont pertinents, parmi les capteurs C1 à Cn, par rapport au type de stockage nécessité par l'objet. Par exemple, s'il s'agit d'un panier de légumes, un capteur de dégagement de gaz, capable de détecter une décomposition commençante de ces denrées périssables, peut être sélectionné (S4) parmi les capteurs à activer pendant le stockage de l'objet. En outre, pour cet exemple, il peut être activé (S4) un capteur de pression pour peser l'objet au moment de sa remise dans le casier et déterminer si le poids ainsi mesuré est conforme aux caractéristiques précédemment analysées (S2). Dans un autre exemple, il peut être pris une photographie, par exemple de face, de l'objet à stocker, dans le cas où il s'agit d'un objet différent d'une denrée périssable, les données de cette photographie faisant alors partie des caractéristiques de l'objet précédemment analysées (S2). Ainsi, il sera par exemple activé (S4) une caméra, en tant que capteur, pour prendre aussi de face une photographie de l'objet et déterminer si l'objet déposé dans le casier est bien conforme à celui photographié. Par ailleurs, un poids de l'objet, ou d'autres caractéristiques peuvent être renseignés (S2), pour voir s'il est conforme par exemple au poids mesuré par un capteur adéquat (de pression par exemple pour le poids) activé précédemment (S4), et ce au moment de la dépose de l'objet.

Par ailleurs, dans un ou plusieurs modes de réalisation, les procédé et dispositif de stockage proposés peuvent être agencés pour que l'utilisateur déposant puisse renseigner (S3) des données d'authentification du client destinataire de l'objet pour ce casier, dans la mesure où l'utilisateur déposant dispose de telles données concernant un ou plusieurs destinataires de l'objet (par exemple des données biométriques que le destinataire aura préalablement communiquées à l'utilisateur déposant, ou encore un identifiant et un mot de passe convenus avec le destinataire, ou autres).

Ensuite, le serveur SER détermine (S4) le jeu de capteurs à sélectionner pour les rendre actifs au moment de l'introduction de l'objet dans le casier, notamment pour vérifier si l'objet correspond bien aux caractéristiques renseignées précédemment (S2). Dans un ou plusieurs modes de réalisation, cette vérification peut s'appuyer sur une table de correspondance LUT, qui peut répertorier les jeux de capteurs appropriés pour différents types d'objets, ainsi que, éventuellement, les casiers équipés de ces capteurs appropriés, et qui sont effectivement disponibles parmi le parc de casiers. Ainsi, le serveur peut vérifier en outre la disponibilité d'un tel casier.

Si notamment:
- les données d'authentification du destinataire ont bien été renseignées,
- le type d'objet déposé est autorisé,
- le casier pouvant accueillir ce type d'objet est effectivement disponible,
alors la transaction peut être validée (S5).

Dans ce cas, le serveur SER peut stocker (S8) les données d'authentification du destinataire, si celles-ci sont connues. Ces données pourront servir au moment où le destinataire, s'il est connu, souhaitera récupérer (S9) l'objet.

Une fois la transaction validée (S5), l'utilisateur déposant peut placer l'objet dans le casier pré-réservé par le serveur SER, et les capteurs du casier qui ont été sélectionnés pour être actifs (C1 ... Cn par exemple) peuvent déterminer (S6) si l'objet correspond bien à celui qui a fait l'objet de la transaction validée (S5). Il peut s'agir par exemple d'une caméra, en tant que capteur, qui prend une photographie de l'objet déposé dans le casier et, avec un module logiciel de reconnaissance de forme, détermine si l'objet correspond bien à l'objet de la transaction, et/ou encore un capteur de poids pour déterminer une conformité du poids de l'objet déposé, ou tout autre capteur existant ou à venir, selon les besoins du moment et l'usage souhaité par le déposant.

À cet effet, au moment où l'actionneur ACT doit verrouiller la porte du casier, le module de communication COM transmet au serveur les données du ou des capteurs impliqués, qui sont analysées auprès du serveur, pour déterminer une conformité de l'objet. L'actionneur ACT ne verrouille la porte qu'à la condition que les données remontées par les capteurs correspondent bien à celles de l'objet qui a fait l'objet de la transaction. Si tel est le cas, l'actionneur verrouille la porte du casier et le module de communication COM remonte une information de validation du dépôt de l'objet au serveur. Sinon, le serveur SER peut notifier via l'interface IHM, ou sur le terminal SEXP de l'déposant, l'identifiant (un numéro ou autre) du casier qu'il faut utiliser parmi les casiers du dispositif de stockage, ce casier étant celui ayant été pré-réservé (S4).

Il convient de noter en outre que la caméra, associée au module de reconnaissance de forme, peut, en fonction du mode de réalisation, permettre de détecter la présence d'un objet non-autorisé (arme, bombe, drogue, animal vivant, ou autre) et déclencher par exemple une alarme auprès du serveur.

Une fois que l'objet a été placé dans le casier approprié, et qu'il a été déterminé, le cas échéant, que l'objet correspond bien à celui de la transaction validée (S5), le serveur peut notifier (S7) le destinataire de l'objet, si celui-ci est connu, par exemple par l'envoi d'un message sur le terminal SREC du destinataire, ou notifier tout utilisateur intéressé par ce type d'objet qui se serait fait connaitre préalablement du système, afin qu'un destinataire vienne récupérer l'objet. L'ouverture du casier et la récupération de l'objet peuvent s'effectuer (S9) ensuite de façon classique en soi, en authentifiant le destinataire éventuel grâce aux données préalablement stockées (S8) par le serveur. Par exemple, l'interface IHM du dispositif de stockage peut relever un identifiant et un mot de passe, ou encore des empreintes biométriques du destinataire, remonter ensuite ces données au serveur SER via le module de communication COM pour comparaison. Si les données correspondent, le serveur peut piloter ensuite l'actionneur ACT via le module COM, pour ouvrir la porte du casier.

Dans un ou plusieurs modes de réalisation, certains au moins des capteurs C1...Cn peuvent rester actifs jusqu'à l'ouverture du casier (S9), notamment pour remonter au serveur un problème lié au stockage, comme par exemple un début de décomposition de denrées périssables (illustré par la flèche en traits pointillés entre les références S6 et S9 sur la figure 4).

Après la récupération (S9) de l'objet, le module de communication COM peut notifier au serveur SER cet événement, et le serveur le notifier (S10) ensuite au terminal de l'utilisateur déposant SEXP, ce qui met fin (S11) à l'exemple de mode de réalisation du procédé proposé illustré par le diagramme de la figure 4.

La **figure 5** illustre une structure possible d'un circuit de traitement CT1 équipant un dispositif de stockage comprenant un casier ou un ensemble de casiers.

En particulier, chaque capteur C1 ... Cn d'un casier est relié à une (ou plusieurs) interface d'entrée INT du circuit de traitement CT1. Par ailleurs, l'actionneur pour le verrouillage/déverrouillage de la porte du casier est relié à un module de commande PIL de l'actionneur ACT. En particulier, chacun de ces équipements INT, PIL sont reliés à un (ou plusieurs) processeur PROC apte à lire des données d'instructions d'un programme informatique pour la mise en œuvre d'un ou plusieurs modes de réalisation du dispositif proposé, ces données d'instructions étant stockées dans une mémoire MEM reliée au processeur PROC et que comporte le circuit de traitement CT1. Le circuit de traitement CT1 peut comporter en outre une interface homme/machine IHM, pour l'identification des utilisateurs (par la saisie d'empreintes biométriques ou de mot de passe, comme indiqué précédemment, par exemple par le destinataire de l'objet, si il est connu), cette interface IHM étant reliée aussi au processeur PROC. Enfin, le circuit de traitement CT1 peut comporter typiquement le module de communication COM au moins avec le serveur SER, via un réseau étendu par exemple.

En référence à la **figure 6****,** le serveur SER comporte lui-même un circuit de traitement CT2 équipé aussi d'un processeur PROC2 et d'une mémoire MEM2 stockant au moins des données d'instructions d'un programme informatique pour la mise en œuvre d'un ou plusieurs modes de réalisation des systèmes et procédés proposés (et notamment les actions S4, S8, S3, S6, S9, en coopération avec le circuit de traitement CT1 du dispositif de stockage présenté en référence à la figure 5), lorsque ces données sont lues par le processeur PROC2. Bien entendu, le circuit de traitement CT2 comporte aussi une interface de communication COM2, avec les modules de communication COM des dispositifs de stockage distants.

Bien entendu, les représentations des figures 3 à 6 sont illustratives, et données ici à titre d'exemples de réalisations possibles, lesquelles peuvent être adaptées autrement selon les applications et les différentes utilisations envisageables, décrites ci-après.

On retiendra néanmoins que la fonction d'un casier du dispositif proposé peut avantageusement être modifiée lorsque le souhaite, par exemple, un utilisateur du casier ou l'administrateur du casier/dispositif de stockage, ce qui permet d'offrir à l'utilisateur différentes fonctionnalités possibles, en fonction du/des objets qu'il y dépose, et de la variété des usages qu'il peut souhaiter faire d'un casier.

Cette modification de fonction s'effectue, par exemple, par l'intermédiaire d'une application sur téléphone mobile/tablette/ordinateur, ou d'une interface homme-machine (tactile, vocale, etc.) locale disponible sur le casier lui-même ou sur le système englobant, gérant un ou plusieurs casiers, tel que le dispositif de stockage précité.

La fonction peut de même être modifiée au travers d'une ou plusieurs interfaces de programmation (ou « API » pour Application Programming Interface).

Selon le mode de réalisation, une demande de modification de fonction, ou de groupe de fonctions, associée à un casier ou groupe de casiers peut déclencher une ou plusieurs des actions suivantes :
- Identification des besoins en termes de capteurs et actionneurs nécessaires à la mise en œuvre de la fonction demandée au groupe de casiers,
- Identification des fonctions de traitement informatique et des communications nécessaires à la mise en œuvre de la fonction,
- Analyse de la présence et de l'état des capteurs et actionneurs disponibles pour exécuter la fonction,
- Analyse de la présence et de l'état de l'unité de traitement informatique et des communications disponibles pour exécuter la fonction,
- Calcul de différence entre besoins exprimés et éléments déjà présents afin de définir une configuration de système cible exprimant des besoins en ressources de traitement et de communication,
- Analyse de la disponibilité des ressources de traitement et de communication accessibles par un casier ou un groupe de casiers, afin de définir un système réparti ou centralisé disposant des ressources nécessaires à la mise en œuvre de la fonction, ou du groupe de fonctions,
- Réservation des ressources pour la bonne exécution de la fonction, ou du groupe de fonctions,
- Calcul de la reconfiguration du système cible qui comprend notamment des opérations de : déploiement de composants logiciels appropriés sur les ressources d'exécution, la configuration de composants logiciels déployés, la configuration de liaisons de communication, etc.,
- Mise en œuvre des opérations de reconfiguration sur le système cible,
- Activation de la fonction ou du groupe de fonctions.

Le dispositif de stockage proposé peut donc être agencé pour que, dans un ou plusieurs modes de réalisation, un utilisateur puisse déposer dans un casier un ou plusieurs objets, et qu'une fonction associée à ce casier soit ensuite déterminée, par exemple par l'intermédiaire d'une interface homme/machine locale, ou par l'intermédiaire d'une application logicielle dédiée (sur téléphone mobile, tablette, PC, ou tout autre équipement).

En fonction des modes de réalisation, les fonctionnalités des casiers peuvent être plus ou moins avancées, notamment au vu des capteurs présents dans chaque casier. Le casier peut contenir typiquement une caméra permettant de filmer tout objet déposé à l'intérieur. Il peut offrir alors une fonctionnalité de détection automatique du type d'objet déposé dans le casier, sous la forme par exemple d'un module informatique de reconnaissance de forme dans les images prises par la caméra. Ce module peut remonter une alerte via un module de communication du casier pour prévenir de l'introduction dans le casier d'un objet de forme non-attendue, voire d'un objet de forme suspecte.

Par exemple, dans le cas de livraison de colis, un serveur gestionnaire de la livraison peut prendre une image de face du colis et la transmettre à un serveur gestionnaire des casiers suite à une transaction entre le serveur gestionnaire de la livraison et le serveur gestionnaire des casiers. Ainsi, lors de l'introduction du colis dans le casier assigné au colis pendant la transaction, la caméra peut prendre une image du colis (en étant disposée sur la paroi supérieure du casier par exemple) et le module de reconnaissance de forme peut déterminer si l'image acquise par la caméra du casier correspond à l'image acquise pendant la transaction. Par exemple, le module de reconnaissance de forme peut piloter l'actionneur d'ouverture/fermeture du casier pour ne pas autoriser la fermeture du casier tant que ces deux images ne correspondent pas, ou encore conditionner la fermeture du casier à une vérification supplémentaire de l'utilisateur (notification et attente de réponse sur son terminal mobile par exemple) ou encore conditionner la fermeture du casier à une vérification supplémentaire par exemple du poids du colis par rapport à un poids attendu (en utilisant cette fois un capteur de pression sur la paroi inférieure du casier).

Dans un autre mode de réalisation, le casier peut posséder un détecteur de gaz et offrir une fonctionnalité permettant à l'utilisateur (producteur de fruits par exemple) ayant déposé ses fruits dans le casier d'être informé qu'un de ses paniers de fruits commence à se décomposer pour qu'il vienne le remplacer.

Dans un autre mode de réalisation, un casier peut posséder un capteur de pression permettant de connaitre le poids d'un objet déposé (une perceuse par exemple). Là encore, le capteur de pression peut déterminer le poids de l'objet pour identifier une correspondance avec un poids présumé de l'objet au moment d'une transaction préalable, ou avec un poids préalablement déterminé. Par exemple, si un utilisateur loue un objet et le ramène dans un casier pour le restituer au loueur, le capteur de pression dont le casier est doté pourra être utilisé pour vérifier que le poids de l'objet restitué correspond au poids de l'objet loué (connu du loueur), fournissant ainsi un élément de vérification que l'objet restitué correspond bien à celui loué.

Les capteurs cités précédemment ne le sont qu'à titre d'exemple et de nombreux autres capteurs peuvent être utilisés dans ces casiers en fonction du mode de réalisation.

Dans un ou plusieurs modes de réalisation, un même casier peut être équipé de différents capteurs, ce qui offre avantageusement la possibilité d'une reconfiguration dynamique de l'usage, des fonctionnalités et du comportement d'un casier, ou groupe de casiers, au travers de la mise en œuvre de capteurs et actionneurs différents exploités par des fonctions informatiques respectant un usage cible. Par exemple, à un moment donné, un casier peut avoir pour fonction de vendre un panier de fruits-légumes, ensuite servir de dépôt de colis pour une expédition, puis permettre la location d'un objet, et offrir ensuite gratuitement un livre ou un sac de couchage à qui en a besoin.

Dans un ou plusieurs modes de réalisation, les capteurs/actionneurs appareillant chaque casier, ainsi que la totalité de l'équipement matériel (carte de calcul, stockage, type d'interfaces avec un utilisateur) peuvent être activés complètement ou partiellement à tout moment, notamment lorsque l'utilisateur s'identifie auprès du casier ou dispositif de stockage en vue d'un stockage prévu préalablement lors d'une transaction décrivant la nature du colis à stocker.

Dans un ou plusieurs modes de réalisation, le dispositif de stockage est agencé de manière à ce que les utilisateurs puissent s'enregistrer initialement dans une base de données utilisateurs, par exemple via une application (application dédiée ou webapplication) et/ou via l'interface homme/machine locale. Un utilisateur enregistré dans la base de données peut se voir attribuer des droits d'utilisation du dispositif de stockage lui permettant de préempter un casier libre, à distance via l'application, ou s'il se déplace jusqu'au lieu où se trouvent les casiers communicants, d'identifier un casier libre et de le préempter pour l'utiliser. Cet utilisateur peut assigner ensuite une fonction à ce casier via l'application ou l'interface homme/machine locale. Selon les capteurs/actionneurs installés au sein du casier, ce dernier peut offrir plus ou moins de services à valeur ajoutée ou de fonctionnalités. Les fonctionnalités liées à la fonction assignée par l'utilisateur sont configurées, à partir de données de configuration par exemple stockées au niveau du serveur de gestion et communiquées au dispositif de stockage pour configuration du casier, et/ou via l'application ou l'interface homme/machine locale, de sorte que ce dernier peut déposer l'objet dans le casier et que lorsque l'utilisateur ferme le casier ou commande la fermeture de la porte du casier, le casier est configuré pour agir comme demandé par sa nouvelle fonction.

Ainsi, dans un ou plusieurs modes de réalisation, chaque casier communicant peut être configuré avec tout type de capteurs/actionneurs, des plus simples aux plus compliqués, permettant d'offrir tout type de services et de fonctionnalités en fonction des possibilités matérielles offertes.

Dans un ou plusieurs modes de réalisation, le dispositif de stockage, qui regroupe les casiers communicants, peut lui-même être apparié avec tout type de capteurs/actionneurs, afin d'avoir aussi ses propres fonctionnalités accessibles localement ou à distance, par exemple pour une administration, un (auto)diagnostique du bon fonctionnement des casiers qu'il contient, une détection du nombre de passages devant le dispositif de stockage, une détection de tentative d'ouverture d'un casier non autorisée avec prise de photographie de l'utilisateur non autorisé, des statistiques sur l'utilisation de chaque casiers, sur les habitudes des personnes les utilisant, etc.

Pour la maintenance du dispositif de stockage, on peut prévoir dans un ou plusieurs modes de réalisation la possibilité d'enlever physiquement un capteur, un actionneur ou une autre partie connectée de l'équipement de casier, et/ou d'y ajouter un ou plusieurs équipements non prévus à l'origine (capteurs, actionneurs, autres). L'ajout de capteurs et actionneurs, mais aussi de ressources d'exécution ou communication, peut intervenir au sein du casier, ou groupe de casiers, mais aussi plus largement dans le cadre de la définition de systèmes cibles liés à la fonction, ou groupe de fonctions, à mettre en œuvre. Toute modification de configuration peut être rendue visible, par exemple par un mécanisme de notification de proche en proche tel que proposé par le protocole UPnP, ou au sein d'un registre tel que proposé par les systèmes à base de « brokers ».

Cet ajout d'équipement peut être utilisé par un service déployé pour le casier lui-même, ou par un service du système englobant le casier (le dispositif de stockage), ou par tout autre équipement, local ou distant (casier, et/ou dispositif de stockage inclus) qui pourrait nécessiter l'utilisation des capacités de ce nouvel équipement.

Ainsi par exemple, dans un ou plusieurs modes de réalisation, par l'intermédiaire d'une application sur un terminal mobile (smartphone ou autre, connecté à un serveur du gestionnaire de dispositifs de stockage) ou d'une interface locale que comporte le dispositif de stockage, un utilisateur peut choisir, par exemple et non limitativement, une des fonctionnalités développées ci-après, si la configuration matérielle (capteurs/actionneurs) liée au casier sélectionné le permet.

La consigne, tout d'abord, permet le dépôt et la récupération d'objets par une même personne. Un utilisateur y dépose un objet et ferme le casier. Seul ce même utilisateur peut récupérer cet objet plus tard.

La vente de fruits, légumes, et autres denrées, ou encore de journaux, ou tout autre bien peut s'opérer comme suit. Un agriculteur peut décider de déposer un panier de fruits, un kilogramme de carottes ou un sac de pommes de terre, puis indiquer à une interface du casier qu'il souhaite vendre ce produit à un tarif précis. Cette fonctionnalité ne permet l'ouverture de la porte du casier que si un acheteur paie le montant indiqué pour récupérer le produit. On comprendra ici que l'actionneur du casier, pour déverrouiller la porte, est relié à un module de vérification de paiement (terminal de paiement par carte bancaire, paiement par espèces, ou autres).

Le dispositif de stockage peut ainsi être configuré pour mettre à jour une base de données d'objets et biens en vente, consultée par l'application, afin que tous les utilisateurs de l'application soient capables d'en être informés s'ils cherchent à acheter cet objet/ce bien. Par ailleurs, tout utilisateur intéressé par l'objet/le bien peut réserver ce bien pour une durée limité (avec ou sans prépaiement), le temps de se déplacer jusqu'au dispositif de stockage, s'identifier et après finalisation du paiement, récupérer l'objet/le bien souhaité. Le déposant/propriétaire de l'objet/du bien mis en vente, une fois dûment identifié, peut venir le récupérer à tout moment sans payer la somme demandée.

La récupération de colis, de lettres, d'objets divers peut s'effectuer par exemple comme suit. Un livreur dépose un colis dans un casier (par exemple à proximité de l'adresse de destination). Le livreur indique via une application mobile ou l'interface locale que le colis est déposé dans ce casier et a pour destinataire un client enregistré dans l'application. Le client est alors informé par l'application mobile qu'un colis l'attend dans ce casier. Il peut ainsi venir le récupérer lorsqu'il le souhaite (dans un délai raisonnable/légal sous peine par exemple de renvoi de son colis à l'expéditeur ou de paiement d'une taxe liée à la durée du stockage). En s'identifiant une fois sur place (par un identifiant et mot de passe par exemple, ou par reconnaissance d'empreinte biométrique, ou autre), le casier ouvre sa porte pour délivrer le colis. On comprendra ici que l'actionneur du casier, pour déverrouiller la porte, peut être relié à un module de vérification d'identité du client (par exemple via une interface de saisie d'identifiant/mot de passe ou d'empreinte biométrique du client, ou par reconnaissance d'un terminal du client par lecture en champ proche ou autre, ou par tout autre moyen).

L'expédition de colis, de lettres peut s'effectuer ainsi. Un utilisateur dépose un colis dans un casier. L'utilisateur configure la fonction du casier pour l' « envoi de colis » via l'application sur son mobile ou via l'interface homme-machine locale. Le gestionnaire de livraison est informé qu'un colis doit être enlevé dans ce casier précisément. Lorsque le livreur passe récupérer le colis, il s'identifie sur place, et le ou les casier(s) contenant le/les colis qui doivent être enlevé(s) s'ouvre(nt) pour que le/les colis soi(en)t récupéré(s). Selon le niveau de fonctionnalités présent dans le casier ou le dispositif de stockage, l'expéditeur du colis peut être informé à ce moment via l'application mobile que son colis a bien été enlevé.

Par ailleurs, le dispositif de stockage ou l'application peut être configuré pour, sur la base d'informations fournies par l'utilisateur expéditeur du colis, informer une société de livraison de venir récupérer le colis placé initialement dans un premier casier par l'expéditeur du colis. La société de livraison assure alors le transport de l'objet du premier casier à un deuxième casier pour la récupération du colis. Selon les fonctionnalités du casier communicant, il est possible d'offrir au déposant du colis un accusé de réception lors de la relève du colis par la société de livraison, ou toute autre fonctionnalité.

Le prêt ou la location d'objets peut s'effectuer comme suit. Un utilisateur qui possède un objet qu'il n'utilise plus ou peu (par exemple une perceuse, une crêpière, un babyphone, ou autres) peut vouloir le mettre à disposition de toute personne qui en aurait un besoin ponctuel. L'utilisateur apporte donc un tel objet et le dépose dans un casier libre. L'utilisateur informe le dispositif de stockage, par l'intermédiaire de l'application ou via une interface homme-machine locale, qu'il a déposé l'objet mis en location dans ce casier, et qu'il souhaite louer cet objet à un tarif qu'il fixe lui-même (par heure, par jour, par semaine, etc.). L'actionneur ferme le casier et met à jour la fonction du casier pour que celui-ci ne s'ouvre que si une tierce personne s'identifie et accepte de payer le tarif indiqué. La location peut courir tant que la tierce personne n'a pas ramené l'objet dans un casier libre similaire (le même ou tout autre casier offrant des fonctionnalités identiques ou équivalentes, situé au même endroit ou ailleurs). Si le propriétaire souhaite récupérer son bien, il s'identifie sur le dispositif de stockage où se trouve son objet (localisé via l'application mobile), et le casier s'ouvre pour lui permettre de le récupérer.

Dans cette réalisation, un utilisateur peut consulter l'application mobile à la recherche d'un objet particulier. L'application peut géolocaliser l'utilisateur et lui fournir la localisation du dispositif de stockage le plus proche contenant cet objet. L'utilisateur peut réserver l'objet s'il le souhaite par l'intermédiaire de l'application et se déplacer alors jusqu'à l'endroit indiqué. Il s'identifie sur place, et récupère l'objet recherché.

Une fois qu'il a terminé d'utiliser l'objet, l'utilisateur doit le ramener dans un dispositif de stockage disponible. Il s'identifie auprès du dispositif de stockage, indique qu'il rapporte un objet loué, le dépose dans le dispositif de stockage, et referme la porte pour que le dispositif de stockage puisse valider le retour de l'objet. Si le dispositif de stockage possède une caméra, ou un capteur de poids, il est possible de proposer par exemple une fonction permettant de vérifier visuellement que l'objet remis dans le dispositif de stockage est identique à celui emprunté, ou encore que son poids est identique.

Une application de premiers secours en situation d'urgence peut se dérouler comme suit. Sur le principe du prêt, il est possible d'utiliser le même procédé pour y entreposer des biens de premiers secours ou d'urgence (défibrillateur, extincteur, premiers soins, etc.), permettant en cas d'urgence de les récupérer et les utiliser rapidement. L'utilisateur se déplace jusqu'au dispositif de stockage, s'identifie, indique le type de situation urgente (incendie, urgence médicale, ou autre), et/ou l'objet de premier secours qu'il souhaite récupérer. Le dispositif de stockage ouvre alors la porte d'un casier comportant un matériel adapté à la situation pour récupérer le bien de premier secours. On peut prévoir un mécanisme de relevé de l'identité de l'utilisateur par photographie de l'utilisateur ou par lecture d'une pièce d'identité pour éviter toute utilisation abusive ou frauduleuse du dispositif.

Il est possible d'envisager l'utilisation d'un tel service par des personnes ne s'étant pas enregistrées au préalable dans une base de données d'utilisateurs, en composant par exemple un numéro d'urgence sur l'interface homme/machine locale, ou via l'application qui permet la localisation et l'ouverture de ces casiers communicants sans inscription ou enregistrement préalable.

Une application de don d'objets peut se dérouler sur le même modèle que les abris à livres. Un utilisateur peut vouloir donner un objet plutôt que de le louer. Il dépose ainsi l'objet qu'il souhaite donner dans un casier, informe via l'application mobile ou l'interface homme-machine locale que cet objet peut être récupéré gratuitement, et le système modifie sa fonction pour ouvrir le casier lorsqu'une tierce personne en fait la demande.

Typiquement, l'application peut géolocaliser l'utilisateur et lui indiquer dans quel dispositif de stockage le plus proche se trouve tel ou tel objet, disponible gratuitement le cas échéant. L'utilisateur se déplace jusqu'au dispositif de stockage, s'identifie, indique quel objet il souhaite récupérer, et l'objet ayant été déclaré comme un don par le précédent propriétaire, le dispositif de stockage lui ouvre la porte pour qu'il récupère l'objet gratuitement. Une fois la porte refermée, le dispositif de stockage met à jour la base de données de l'application pour indiquer que cet objet n'est plus disponible/que le casier est vide.

Un utilisateur peut en outre déléguer des droits à un autre utilisateur. Typiquement dans les cas de retraits, cette fonctionnalité peut être utile par exemple pour une personne âgée délégant un droit de retrait de ses colis à son aide-à-la-personne pour les situations où elle ne se sent pas en capacité d'aller récupérer elle-même le colis (fatigue, mauvaise santé, mauvaise météo, poids du colis, etc.). La délégation de droits peut être temporaire ou permanente.

On se réfère maintenant à la **figure 7** pour décrire une réalisation dans laquelle, ici, un même capteur CAP peut être partagé entre deux casiers CAS1 et CAS2. Les deux casiers ont une cloison commune délimitée par deux parois référencées PAR1 pour le casier CAS1 et PAR2 pour le casier CAS2. Une partie de chaque paroi PAR1, PAR2 est escamotable pour libérer une ouverture par laquelle le capteur CAP peut passer dans l'un des casiers (le casier CAS 1 dans la figure 7). A cet effet, on peut prévoir un clapet CLA1, pivotant sur une charnière CHA1, aménagé dans la première paroi PAR1 pour libérer l'ouverture du premier casier CAS1 et laisser passer ainsi le capteur CAP dans le premier casier CAS1. Bien entendu, on prévoit symétriquement un clapet CLA2, pivotant sur une charnière CHA2, aménagé dans la deuxième paroi PAR2 pour libérer l'ouverture du deuxième casier CAS2 et laisser passer possiblement ainsi le capteur CAP dans le deuxième casier CAS2. Ainsi, le capteur CAP (par exemple une caméra ou autre) peut pivoter d'une première position dans le premier casier CAS1 à une deuxième position dans le deuxième casier CAS2, grâce à un organe pivotant selon une liaison rotule ROT, auquel est relié le capteur CAP. Il convient d'observer que le capteur CAP peut en outre être « rangé » dans une position intermédiaire entre les deux parois PAR1 et PAR2. On prévoit bien entendu une connexion CC du capteur CAP par exemple pour son alimentation électrique et/ou la communication des données qu'il (CAP) capte.

On se réfère maintenant à la **figure 8** pour décrire une réalisation générale, pouvant englober optionnellement la réalisation illustrée sur la figure 7, et dans laquelle tous les capteurs sont initialement logés dans un ou plusieurs logements de capteurs LC1, LC2, LC3, etc. Dans l'exemple illustré, chaque casier CAS1, CAS2, CAS3, etc., comporte en outre au moins une ouverture CLA1, respectivement CLA2, CLA3. Chaque casier peut comporter d'autres ouvertures pour l'introduction de capteurs CLA11, CLA12, en nombres identiques ou différents. Les ouvertures peuvent optionnellement être recouvertes d'un clapet escamotable pour comme illustré sur la figure 7. En particulier, un organe d'acheminement ACH est configuré pour acheminer chaque capteur d'un logement LC1 vers une ouverture de casier CLA1, CLA2, CLA3. L'organe d'acheminent ACH peut comporter une pince mécanique articulée et guidée sur des rails (ou par des câbles), pour saisir un capteur dans un logement LC1, LC2, etc. et l'acheminer vers une ouverture CLA1, CLA2, etc. d'un casier. L'organe d'acheminent ACH peut comporter alternativement une tête magnétique pour attirer des parties métalliques de chaque capteur et déplacer ensuite un capteur ainsi saisi.

Par exemple, il peut être prévu un jeu de capteurs de différents types dans le logement LC2 entre les deux casiers adjacents CAS1 et CAS2 et qui peuvent être acheminés jusque dans les ouvertures CLA1, CLA2 de ces casiers CAS1 et CAS2. Ainsi, le jeu de capteurs logés dans le logement LC2 peut être partagé entre le casier CAS1 et le casier CAS2. Il en est de même pour les capteurs du logement LC3, partagés entre le casier CAS2 et le casier CAS3, etc.

Typiquement, on peut prévoir plusieurs capteurs du même type (une caméra par exemple) dans un logement LC2 lorsqu'un type de capteur particulier est souvent sollicité pour tous les casiers CAS1, CAS2, ou encore de sorte qu'en cas de panne d'un capteur de ce type, il peut être acheminé un capteur de remplacement dans le logement.

Alternativement à cette forme de réalisation, il peut être prévu des logements pour des types respectifs de capteurs et un acheminement d'un capteur de chaque type, sélectionné à l'étape S4 de la figure 4, vers un casier courant à équiper en vue d'un stockage imminent.

Bien entendu, en référence à la **figure 9****,** il peut être prévu aussi un logement unique LC pour tous les types de capteurs, par exemple parallèle au rail RAI qui dessert tout un ensemble de casiers comme illustré dans l'exemple de la figure 9.

On relèvera en outre que, dans l'un quelconque des modes de réalisation des figures 8 et 9 notamment, le moyen d'acheminement des capteurs/actionneurs peut se déplacer dans les trois dimensions (horizontal, vertical, avant/arrière, et toute combinaison entre ces déplacements). En outre, il permet de transporter non seulement un, mais possiblement plusieurs capteurs/actionneurs en une seule fois vers le casier à équiper (typiquement un bloc de capteurs choisis pour un type de surveillance donné).

Bien entendu, ces fonctionnalités ne sont que des exemples de services possibles de tels casiers communicants. D'autres fonctionnalités sont aussi possibles, selon les usages et besoins des utilisateurs.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, les systèmes, dispositifs de stockage, plateforme(s), serveurs, équipements utilisateur et procédés proposés comprennent différentes variantes, modifications et perfectionnements qui apparaîtront de façon évidente à l'Homme de l'art, étant entendu que ces différentes variantes, modifications et perfectionnements font partie de la portée de l'invention, telle que définie par les revendications qui suivent. En outre, il se peut que certains systèmes et équipements décrits ci-dessus n'incorporent pas la totalité des modules et fonctions décrits pour les modes de réalisation préférés.

## Revendications

1. Procédé, mis en œuvre par des moyens informatiques, de gestion de stockage d'objets, le procédé comprenant, dans un dispositif de stockage comportant au moins un casier incluant un organe de verrouillage/déverrouillage du casier (ACT), et une pluralité de capteurs (C1,Cn), aptes à mesurer des grandeurs physiques respectives, agencés pour délivrer des données propres aux objets déposés dans le casier :
- recevoir une requête de stockage d'un objet dans un casier du dispositif de stockage ;
- déterminer un type d'objet correspondant à l'objet à stocker sur la base de données relatives à l'objet reçues par le dispositif de stockage ;
- sélectionner, en fonction du type d'objet déterminé, un jeu de capteurs parmi la pluralité de capteurs, à activer au moins pendant une utilisation du casier, un capteur dudit jeu de capteurs à activer étant un capteur de gaz si l'objet à stocker est déterminé comme étant de type denrée périssable ;
- sur détection d'une utilisation du casier, activer les capteurs sélectionnés.

2. Procédé selon la revendication 1, comprenant en outre :
- sur détection d'une utilisation du casier, traiter les données délivrées par le jeu de capteurs activés pour vérifier si l'objet déposé dans le casier correspond au type d'objet déterminé selon au moins un critère choisi, et
- piloter l'organe de verrouillage/déverrouillage du casier (ACT) selon une vérification respectivement positive/négative de l'objet déposé.

3. Procédé selon la revendication 1, dans lequel les données relatives à l'objet comportent au moins des données d'image de l'objet, et le jeu de capteurs activés comporte une caméra apte, en coopération avec un module de reconnaissance de forme, à acquérir au moins une image de l'objet suite au dépôt de l'objet dans le casier, le procédé comprenant en outre :
- déterminer si les données de capture d'image de l'objet déposé correspondent aux données d'image relatives à l'objet.

4. Procédé selon l'une des revendications 2 et 3, dans lequel les données relatives à l'objet comportent au moins des données de poids de l'objet, et le jeu de capteurs activés comporte un capteur de pression sur une paroi interne inférieure du casier pour peser l'objet suite au dépôt de l'objet dans le casier, le procédé comprenant en outre :
- déterminer si le poids mesuré par le capteur de pression correspond au poids de l'objet selon les données reçues.

5. Procédé selon l'une des revendications précédentes, dans lequel le dispositif de stockage comporte une pluralité de casiers, et au moins un casier est choisi, parmi ladite pluralité de casiers, pour un stockage d'objets en fonction du type d'objet à stocker, le procédé comprenant en outre :
- identifier un casier incluant le jeu sélectionné de capteurs et apte à stocker l'objet.

6. Procédé selon l'une des revendications précédentes, dans lequel le jeu de capteurs activés pour un casier donné est modifiable au moins d'un déverrouillage du casier à un déverrouillage suivant, notamment en fonction du type d'objet à stocker.

7. Procédé selon l'une des revendications précédentes, dans lequel ledit au moins un casier comporte au moins une paroi dans laquelle est aménagée au moins une ouverture et dans lequel le dispositif de stockage comporte en outre au moins un logement pour une pluralité de capteurs et un organe d'acheminement d'un capteur depuis un emplacement de ce capteur dans le logement jusqu'à une ouverture de casier, le procédé comportant :
- après la sélection du jeu de capteurs à activer, acheminer au moins un capteur du jeu sélectionné jusqu'à ladite ouverture pour introduire au moins partiellement ce capteur dans le casier.

8. Procédé selon la revendication 7, le procédé comportant :
- après la sélection du jeu de capteurs à activer, vérifier une disponibilité dans le casier des capteurs du jeu sélectionné,
- et, en cas d'indisponibilité de l'un au moins des capteurs du jeu de capteurs à activer dans le casier, acheminer, depuis le logement de capteurs jusqu'à l'ouverture du casier, un capteur homologue au capteur indisponible.

9. Procédé selon la revendication 8, dans lequel :
- le dispositif de stockage comporte une pluralité de casiers comportant chacun au moins une paroi comprenant au moins une ouverture,
- le logement comporte une pluralité de types distincts de capteurs à des emplacements prédéterminés du logement,
le procédé comportant :
- après la sélection du jeu de capteurs à activer dans un casier courant, vérifier une disponibilité dans le casier courant des capteurs du jeu sélectionné,
- et, en cas d'indisponibilité de l'un au moins des capteurs du jeu dans le casier courant, adresser l'organe d'acheminement pour piloter l'acheminement d'un capteur homologue au capteur indisponible, depuis l'emplacement du capteur homologue dans le logement de capteurs jusqu'à l'ouverture du casier courant.

10. Dispositif de stockage comprenant au moins un casier équipé d'une pluralité de capteurs aptes à mesurer des grandeurs physiques respectives et d'un organe de verrouillage/déverrouillage du casier, le dispositif comprenant également ur circuit de traitement (CT1) configuré pour la mise en œuvre du procédé selon l'une des revendications précédentes.

11. Dispositif selon la revendication 10, dans lequel le casier comporte au moins une paroi dans laquelle est aménagée au moins une ouverture, et le dispositif de stockage comporte en outre un organe d'acheminement d'au moins un capteur du jeu sélectionné jusqu'à ladite ouverture pour introduire au moins partiellement ce capteur dans le casier.

12. Dispositif selon la revendication 11, dans lequel le dispositif de stockage comporte en outre au moins un logement pour une pluralité de capteurs, l'organe d'acheminement étant agencé pour acheminer un capteur du jeu sélectionné, depuis le logement de capteurs jusqu'à l'ouverture du casier.

13. Système de gestion de stockage d'objets, comprenant :
- un serveur (SER) et
- un dispositif de stockage comprenant :
- au moins un casier incluant une pluralité de capteurs aptes à mesurer des grandeurs physiques respectives,
- un actionneur pour verrouiller/déverrouiller le casier,
- et un module de communication (COM) avec le serveur (SER),
le serveur comprenant un circuit de traitement (CT2) pour :
- recevoir une requête de stockage d'un objet dans un casier,
- déterminer un type d'objet correspondant à l'objet à stocker sur la base de données relatives à l'objet reçues par le dispositif de stockage ;
- sélectionner, en fonction du type d'objet déterminé, un jeu de capteurs parmi la pluralité de capteurs du casier, à activer au moins pendant une utilisation du casier, un capteur dudit jeu de capteurs à activer étant un capteur de gaz si l'objet à stocker est déterminé comme étant de type denrée périssable ;
- sur détection d'une utilisation du casier, activer les capteurs sélectionnés.

14. Programme informatique comportant des instructions pour la mise en œuvre du procédé selon l'une des revendications 1 à 9, lorsque lesdites instructions sont exécutées par un processeur.

## Patentansprüche

1. Verfahren zum Verwalten des Speicherns von Objekten, das mithilfe von Informatikmitteln durchgeführt wird, wobei das Verfahren in einer Speichervorrichtung mit mindestens einem Fach, das ein Verriegelungs-/Entriegelungsorgan (ACT) für das Fach aufweist, und einer Vielzahl von Sensoren (C1, Cn), die jeweils physikalische Größen messen können und so angeordnet sind, dass sie Daten liefern, die für die im Fach deponierten Objekten spezifisch sind, Folgendes aufweist:
- Empfangen einer Anforderung zum Speichern eines Objekts in einem Fach der Speichervorrichtung;
- Bestimmen eines Objekttyps, der dem zu speichernden Objekt entspricht, auf der Grundlage von Daten bezüglich des Objekts, die von der Speichervorrichtung empfangen werden;
- Auswählen eines Satzes von Sensoren aus der Vielzahl von Sensoren entsprechend dem bestimmten Objekttyp, der mindestens während einer Nutzung des Fachs aktiviert werden soll, wobei ein Sensor des zu aktivierenden Satzes von Sensoren ein Gassensor ist, wenn das zu speichernde Objekt als verderbliches Lebensmittel bestimmt wird;
- Aktivieren der ausgewählten Sensoren bei Erkennung einer Fachnutzung.

2. Verfahren nach Anspruch 1, das darüber hinaus Folgendes aufweist:
- Verarbeiten der von dem Satz aktivierter Sensoren gelieferten Daten bei Erkennung einer Fachnutzung, um zu prüfen, ob das im Fach deponierten Objekt dem Objekttyp entspricht, der gemäß mindestens einem ausgewählten Kriterium bestimmt wurde, und
- Steuern des Verriegelungs-/Entriegelungsorgans des Fachs (ACT) entsprechend einer positiven bzw. negativen Überprüfung des deponierten Objekts.

3. Verfahren nach Anspruch 1, wobei die Daten bezüglich des Objekts mindestens Bilddaten des Objekts aufweisen und der Satz aktivierter Sensoren eine Kamera aufweist, die in Zusammenarbeit mit einem Mustererkennungsmodul in der Lage ist, mindestens ein Bild des Objekts nach dem Deponieren des Objekts im Fach zu erfassen, wobei das Verfahren darüber hinaus Folgendes aufweist:
- Bestimmen, ob die Bildaufnahmedaten des deponierten Objekts mit den Bilddaten bezüglich des Objekts übereinstimmen.

4. Verfahren nach einem der Ansprüche 2 und 3, wobei die Daten bezüglich des Objekts mindestens Daten zum Gewicht des Objekts aufweisen und der Satz aktivierter Sensoren einen Drucksensor an einer unteren Innenwand des Fachs aufweist, um das Objekt nach dem Deponieren des Objekts im Fach zu wiegen, wobei das Verfahren darüber hinaus Folgendes aufweist:
- Bestimmen, ob das vom Drucksensor gemessene Gewicht mit dem Gewicht des Objekts gemäß den empfangenen Daten übereinstimmt.

5. Verfahren nach einem der vorhergehenden Ansprüche, wobei die Speichervorrichtung eine Vielzahl von Fächern aufweist und mindestens ein Fach aus der Vielzahl von Fächern zum Speichern von Objekten in Abhängigkeit vom Typ des zu speichernden Objekts ausgewählt wird, wobei das Verfahren darüber hinaus Folgendes aufweist:
- Identifizieren eines Fachs, das den ausgewählten Satz von Sensoren enthält und in der Lage ist, das Objekt zu speichern.

6. Verfahren nach einem der vorhergehenden Ansprüche, wobei der Satz der für ein bestimmtes Fach aktivierten Sensoren zumindest zwischen einer Entriegelung des Fachs und einer folgenden Entriegelung veränderbar ist, insbesondere in Abhängigkeit vom Typ des zu speichernden Objekts.

7. Verfahren nach einem der vorhergehenden Ansprüche, wobei das mindestens eine Fach mindestens eine Wand aufweist, in der mindestens eine Öffnung ausgebildet ist, und wobei die Speichervorrichtung darüber hinaus mindestens eine Aufnahme für eine Vielzahl von Sensoren und ein Organ zum Befördern eines Sensors von einem Ort dieses Sensors in der Aufnahme zu einer Öffnung des Fachs aufweist, wobei das Verfahren Folgendes aufweist:
- Befördern, nach dem Auswählen des zu aktivierenden Satzes von Sensoren, mindestens eines Sensors des ausgewählten Satzes zu der Öffnung, um diesen Sensor mindestens teilweise in das Fach einzuführen.

8. Verfahren nach Anspruch 7, wobei das Verfahren Folgendes aufweist:
- Prüfen, nach dem Auswählen des zu aktivierenden Satzes von Sensoren, ob die Sensoren des ausgewählten Satzes im Fach verfügbar sind,
- und, falls mindestens einer der Sensoren des zu aktivierenden Satzes von Sensoren nicht im Fach verfügbar ist, Befördern eines mit dem nicht verfügbaren Sensor kompatiblen Sensors von der Sensoraufnahme zur Öffnung des Fachs.

9. Verfahren nach Anspruch 8, wobei:
- die Speichervorrichtung eine Vielzahl von Fächern aufweist, die jeweils mindestens eine Wand mit mindestens eine Öffnung aufweisen,
- die Aufnahme eine Vielzahl unterschiedlicher Typen von Sensoren an vorbestimmten Stellen des Gehäuses aufweist, wobei das Verfahren Folgendes aufweist:
- Prüfen, nach dem Auswählen des in einem aktuellen Fach zu aktivierenden Satzes von Sensoren, ob die Sensoren des ausgewählten Satzes im aktuellen Fach verfügbar sind,
- und, falls mindestens einer der Sensoren des Satzes im aktuellen Fach nicht verfügbar ist, das Beförderungsorgan anweisen, die Beförderung eines mit dem nicht verfügbaren Sensor kompatiblen Sensors vom Standort des kompatiblen Sensors in der Sensoraufnahme bis zur Öffnung des aktuellen Fachs zu steuern.

10. Speichervorrichtung mit mindestens einem Fach, das mit einer Vielzahl von Sensoren ausgestattet ist, die jeweils physikalische Größen messen können, und mit einem Verriegelungs-/Entriegelungsorgan für das Fach, wobei die Vorrichtung darüber hinaus eine Verarbeitungsschaltung (CT1) aufweist, die für die Durchführung des Verfahrens nach einem der vorhergehenden Ansprüche konfiguriert ist.

11. Vorrichtung nach Anspruch 10, wobei das Fach mindestens eine Wand aufweist, in der mindestens eine Öffnung ausgebildet ist, und die Speichervorrichtung darüber hinaus ein Organ zum Befördern mindestens eines Sensors des ausgewählten Satzes zu der Öffnung aufweist, um diesen Sensor mindestens teilweise in das Fach einzuführen.

12. Vorrichtung nach Anspruch 11, wobei die Speichervorrichtung darüber hinaus mindestens eine Aufnahme für eine Vielzahl von Sensoren aufweist, wobei das Beförderungsorgan dazu ausgelegt ist, einen Sensor des ausgewählten Satzes von der Sensoraufnahme zur Öffnung des Fachs zu befördern.

13. System zum Verwalten des Speicherns von Objekten, das Folgendes aufweist:
- einen Server (SER) und
- eine Speichervorrichtung, die Folgendes aufweist:
- mindestens ein Fach mit einer Vielzahl von Sensoren, die jeweils physikalische Größen messen können,
- ein Stellglied zum Verriegeln/Entriegeln des Fachs,
- und ein Kommunikationsmodul (COM) mit dem Server (SER), wobei der Server eine Verarbeitungsschaltung (CT2) aufweist zum:
- Empfangen einer Anforderung zum Speichern eines Objekts in einem Fach,
- Bestimmen eines Objekttyps, der dem zu speichernden Objekt entspricht, auf der Grundlage von Daten bezüglich des Objekts, die von der Speichervorrichtung empfangen werden;
- Auswählen eines Satzes von Sensoren aus der Vielzahl von Sensoren des Fachs entsprechend dem bestimmten Objekttyp, der mindestens während einer Nutzung des Fachs aktiviert werden soll, wobei ein Sensor des zu aktivierenden Satzes von Sensoren ein Gassensor ist, wenn das zu speichernde Objekt als verderbliches Lebensmittel bestimmt wird;
- Aktivieren der ausgewählten Sensoren bei Erkennung einer Fachnutzung.

14. Computerprogramm mit Anweisungen zum Durchführen des Verfahrens nach einem der Ansprüche 1 bis 9, wenn die Anweisungen von einem Prozessor ausgeführt werden.

## Claims

1. Method, implemented by computer means, for managing the storage of objects, the method comprising, in a storage device comprising at least one locker including a locking/unlocking member for locking/unlocking the locker (ACT) and a plurality of sensors (C1, Cn) able to measure respective physical quantities, designed to deliver data specific to the objects deposited in the locker:
- receiving a request to store an object in a locker of the storage device;
- determining a type of object corresponding to the object to be stored on the basis of data relating to the object and received by the storage device;
- selecting, depending on the determined type of object, a set of sensors from among the plurality of sensors to be activated at least during use of the locker, a sensor of said set of sensors to be activated being a gas sensor if the object to be stored is determined as being a perishable commodity;
- upon detecting use of the locker, activating the selected sensors.

2. Method according to Claim 1, furthermore comprising:
- upon detecting use of the locker, processing the data delivered by the set of activated sensors in order to check whether the object deposited in the locker corresponds to the determined type of object according to at least one chosen criterion, and
- controlling the locking/unlocking member for locking/unlocking the locker (ACT) according to a respectively positive/negative check on the deposited object.

3. Method according to Claim 1, wherein the data relating to the object comprise at least image data of the object, and the set of activated sensors comprises a camera able, in cooperation with a shape recognition module, to acquire at least one image of the object following the deposition of the object in the locker, the method furthermore comprising:
- determining whether the captured image data of the deposited object correspond to the image data relating to the object.

4. Method according to either of Claims 2 and 3, wherein the data relating to the object comprise at least data about the weight of the object, and the set of activated sensors comprises a pressure sensor on a lower internal wall of the locker for weighing the object following the deposition of the object in the locker, the method furthermore comprising:
- determining whether the weight measured by the pressure sensor corresponds to the weight of the object according to the received data.

5. Method according to one of the preceding claims, wherein the storage device comprises a plurality of lockers, and at least one locker is chosen, from among said plurality of lockers, to store objects on the basis of the type of object to be stored, the method furthermore comprising:
- identifying a locker including the selected set of sensors and able to store the object.

6. Method according to one of the preceding claims, wherein the set of sensors that are activated for a given locker is able to be modified at least from one unlocking of the locker to a next unlocking, in particular on the basis of the type of object to be stored.

7. Method according to one of the preceding claims, wherein said at least one locker comprises at least one wall in which at least one opening is formed and wherein the storage device furthermore comprises at least one housing for a plurality of sensors and a routing member for routing a sensor from a location of this sensor in the housing to a locker opening, the method comprising:
- after selecting the set of sensors to be activated, routing at least one sensor of the selected set to said opening in order to at least partially insert this sensor into the locker.

8. Method according to Claim 7, the method comprising:
- after selecting the set of sensors to be activated, checking availability of the sensors of the selected set in the locker,
- and, if at least one of the sensors of the set of sensors to be activated is unavailable in the locker, routing a sensor homologous to the unavailable sensor from the sensor housing to the opening of the locker.

9. Method according to Claim 8, wherein:
- the storage device comprises a plurality of lockers each comprising at least one wall comprising at least one opening,
- the housing comprises a plurality of distinct types of sensors at predetermined locations in the housing,
the method comprising:
- after selecting the set of sensors to be activated in a current locker, checking availability of the sensors of the selected set in the current locker,
- and, if at least one of the sensors of the set is unavailable in the current locker, directing the routing member to control the routing of a sensor homologous to the unavailable sensor from the location of the homologous sensor in the sensor housing to the opening of the current locker.

10. Storage device comprising at least one locker equipped with a plurality of sensors able to measure respective physical quantities and with a locking/unlocking member for locking/unlocking the locker, the device also comprising a processing circuit (CT1) configured to implement the method according to one of the preceding claims.

11. Device according to Claim 10, wherein the locker comprises at least one wall in which at least one opening is formed, and the storage device furthermore comprises a routing member for routing at least one sensor of the selected set to said opening in order to at least partially insert this sensor into the locker.

12. Device according to Claim 11, wherein the storage device furthermore comprises at least one housing for a plurality of sensors, the routing member being designed to route a sensor of the selected set from the sensor housing to the opening of the locker.

13. Object storage management system, comprising:
- a server (SER) and
- a storage device comprising:
- at least one locker including a plurality of sensors able to measure respective physical quantities,
- an actuator for locking/unlocking the locker,
- and a communication module (COM) for communicating with the server (SER),
the server comprising a processing circuit (CT2) for:
- receiving a request to store an object in a locker,
- determining a type of object corresponding to the object to be stored on the basis of data relating to the object and received by the storage device;
- selecting, depending on the determined type of object, a set of sensors from among the plurality of sensors of the locker to be activated at least during use of the locker, a sensor of said set of sensors to be activated being a gas sensor if the object to be stored is determined as being a perishable commodity;
- upon detecting use of the locker, activating the selected sensors.

14. Computer program containing instructions for implementing the method according to one of Claims 1 to 9 when said instructions are executed by a processor.
